# EUROPÄISCHE PATENTSCHRIFT

(11) **EP 2 420 125 B1**
(45) Veröffentlichungstag und Bekanntmachung des Hinweises auf die Patenterteilung: **20.03.2013**
(21) Anmeldenummer: 11006596.8
(22) Anmeldetag: 11.08.2011
(51) Int. Cl.: A01D 17/10, B65G 15/52

(54) **Fördervorrichtung für Hackfruchterntemaschinen**
Conveyor device for root crop harvesting machines
Dispositif de transport pour machines de récolte de fruits hachés

(30) Priorität: 20.08.2010 DE 102010035043
(43) Veröffentlichungstag der Anmeldung: 22.02.2012
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Pott, Ulrich

(56) Entgegenhaltungen:
- EP-A1- 1 728 739
- DE-A1- 2 425 036

## Beschreibung

Die Erfindung betrifft eine Fördervorrichtung für Hackfruchterntemaschinen mit einem endlos umlaufenden Förderorgan gemäß dem Oberbegriff des Anspruchs 1.

Bekannte Fördervorrichtungen für Hackfruchterntemaschinen, Sortieranlagen o. dgl. Anwendungen in der Erntetechnik weisen jeweilige nach Art von Transportbändern wirkende Siebkettenförderer auf, die insbesondere für Kartoffel- und Rübenerntemaschinen Verwendung finden und dabei mit dem Erntegut aufgenommene Bodenteile abgesiebt werden. Außerdem sind Fördervorrichtungen bekannt (DE 201 16 382 U1, EP 1 728 739 B1), die als Überladeelevatoren das gerodete Erntegut an Transportfahrzeuge o. dgl. übergeben. Bei diesen Vorrichtungen sind band-, gitter- oder tuchförmige Ablageflächen für das weitgehend gereinigte Erntegut wirksam, wobei dieses durch quer zur Förderrichtung verlaufende Mitnehmer im Bereich der Ablageflächen zurückgehalten und so auch im Bereich von geneigten Transportstrecken sicher weitergeleitet werden kann.

Allgemein bekannt sind auch Becherförderer (DE 24 25 036), bei denen ein dreiseitig durch Gummiwände geschlossener Transportraum vorgesehen ist, so dass darin Chemikalien, pulverförmige Güter o. dgl. erfasst und weitergeleitet werden. Eine Trennung von Erntegut und aufgenommenen Bodenteilen durch Sieben ist bei derartigen Becherförderern nicht möglich und auch nicht vorgesehen.

Die Erfindung befasst sich mit dem Problem, eine Fördervorrichtung für insbesondere Hackfruchterntemaschinen zu schaffen, deren mit geringem Aufwand herstellbares und montierbares Förderorgan eine verbesserte Langzeitstabilität aufweist, dabei eine schonende Weitergabe des Erntegutes ermöglicht und bei vergleichsweise geringem Gewicht des Systems eine Anpassung an unterschiedliche Transportlängen erreichbar ist.

Die Erfindung löst dieses Problem durch eine Ausgestaltung der Fördervorrichtung für Hackfruchterntemaschinen mit den Merkmalen des Anspruchs 1. Hinsichtlich weiterer vorteilhafter Ausgestaltungen wird auf die Ansprüche 2 bis 27 verwiesen.

Die Fördervorrichtung für Hackfruchterntemaschinen o. dgl. Anwendungsgebiete ist mit einem Förderorgan versehen, das in erfindungsgemäßer Ausführung aus einzelnen Flächenelementen zusammengesetzt wird. Diese sind in Form von einstückigen Strukturkörpern so hergestellt, dass jedes der Flächenelemente als integrale Teilbereiche zumindest einen Mitnehmer und zumindest eine Ablagefläche definiert.

Zur Bildung eines in seiner Länge weitgehend variablen Förderorgans werden diese Strukturkörper bandartig aneinandergereiht und miteinander verbunden, so dass - ausgehend von einer weitgehend ebenen Ausgangsstellung des flächigen Strukturkörpers - der Teilbereich des Mitnehmers jeweils eine Winkelstellung zur unmittelbar anschließenden Ablagefläche einnehmen kann und damit in Förderrichtung eine an sich bekannte Vielzahl von aneinandergereihten "Fördertaschen" gebildet wird. Durch die bandartige Aneinanderreihung werden jeweilige Verbindungszonen für das "endlose" Förderorgan vorgegeben, wobei diese Verbindungszonen gelenkartig ausgebildet sind und jeweilige Verbindungsachsen quer zur Förderrichtung aufweisen.

Zur Bildung des endlosen bandartigen Förderorgans ist auch denkbar, die einzelnen Strukturkörper in jeweiligen parallel zur Förderrichtung verlaufenden Verbindungszonen zugstabil zu verbinden oder quer- und längsgerichtete Verbindungszonen zu kombinieren.

Diese Strukturkörper mit den jeweils als Teilebereiche vorgesehenen Mitnehmern und Ablageflächen sind in vorteilhafter Ausführung zumindest teilweise aus Kunststoff geformt, so dass die bei einer vergleichbaren Fördervorrichtung mit Fördertuch (DE 20 2005 008 426) erreichbaren und das Erntegut schonenden Transportphasen ebenfalls möglich sind. Gleichzeitig wird mit der einstückigen Kunststoffausführung der Strukturkörper jedoch auch eine vorteilhafte Erhöhung der Langzeitstabilität derartiger Systeme erreicht, da eine entsprechende Reißfestigkeit wirksam ist.

Durch Optimierung des Herstellungsverfahrens können die Strukturkörper insbesondere als jeweilige Spritzgussteile in hohen Stückzahlen kostengünstig gefertigt werden, so dass die in Verbindungsstellung bandartig aneinandergereihten Strukturkörper ein aus Gleichbauteilen einfach montierbares und durch entsprechende Auswahl des Kunststoffmaterials sowie der Materialstärken leicht bauendes System bilden. Mit der Spritzgussfertigung sind entsprechende Werkzeuge verbunden, die kostenoptimal auf die Herstellung von Flächenelementen als Einzelteile gerichtet sind. Diese weitgehend "ebenen" Flächenelemente mit den Teilbereichen des Mitnehmers und der Auflagefläche können auch so konzipiert werden, dass die jeweiligen Mitnehmer an dem Flächenelement als aus dessen ebener Fläche vertikal abragende Teilbereiche geformt sind und damit in der Montagephase die jeweiligen freien Enden der Ablageflächen aneinandergrenzend verbunden werden.

Die konstruktive Gestaltung der Strukturkörper im Bereich des Mitnehmers und der Ablagefläche sieht vor, dass in diesen Teilbereichen jeweilige Durchlassöffnungen so eingeformt werden können, dass bei guten elastischen Eigenschaften die Langzeitstabilität dieses aus Strukturkörpern zusammengesetzten Förderbandes weitgehend unbeeinflusst bleibt. Durch die Ausbildung eines entsprechenden Lochmusters in den Strukturkörpern kann die Fördervorrichtung zusätzlich für eine an den eigentlichen Rodevorgang anschließende Siebphase genutzt werden, da beispielsweise die zugeführten Knollen als Erntegut im Bereich der Ablagefläche nochmals eine "Rollbewegung" ausführen und so von Erdstrukturen befreit werden können. Damit können auf das Förderorgan übergeleitete Erd- oder Sandbestandteile als ungewollte Beimengungen durch das Lochmuster hindurch fallen, es erfolgt kein Weitertransport, und das zum Abtransport gelangende Erntegut weist weniger Verschmutzungen auf.

Die einstückigen Strukturkörper weisen im Flächenbereich zwischen Mitnehmer und Ablagefläche jeweils eine in Verbindungsstellung quer zur Förderrichtung verlaufende Biegezone auf. In diesem gleichzeitig als Verbindungszone nutzbaren Bereich ist nach Art eines "Filmscharniers" die gelenkartige "Winkelverstellung" des Mitnehmers in Bezug zur jeweiligen Ablagefläche hin möglich, derart, dass in Förderrichtung des endlos umlaufenden Förderorgans im Bereich dieser Mitnehmer jeweils optimale Aufnahme- und Mitnahmebedingungen für die in den taschenartigen Gefachen zwischen den Mitnehmern befindlichen Teilmengen des Erntegutes erreicht werden.

Für die vergleichsweise einfache Montage der in Verbindungsstellung bandartig aneinandergereihten Strukturkörper ist vorgesehen, dass diese in der Verbindungszone mit jeweiligen Verbindungsprofilen geformt werden. Dabei sind die Strukturkörper so konzipiert, dass insbesondere im Bereich der Biegezone zusammenwirkende Profile vorgesehen sind. Dabei sind jeweilige Verbindungsprofile der Biegezone komplementär zu jeweiligen an den vorderen Querseitenenden der Ablageflächen vorgesehenen Verbindungsprofilen geformt. Diese komplementären Verbindungsprofile können im einfachsten Falle mit jeweiligen Rast- und/oder Clipelementen versehen sein, so dass eine schnelle Verbindung dieser Nut-Feder-Struktur denkbar ist.

In zweckmäßiger Ausführung ist im Bereich dieser Verbindungsprofile ein zusätzliches Querträgerteil vorgesehen. Dieses kann in formschlüssiger Verbindungslage gleichzeitig die beiden ineinander gesteckten Verbindungsprofile erfassen, so dass damit nebeneinander befindliche Strukturkörper eine zugstabile Fixierung aufweisen. Die jeweiligen Querträgerteile können dabei jeweilige als Ansätze geformte Teilbereiche der Verbindungsprofile durchgreifen und sind randseitig in jeweiligen Sacklöchern o. dgl. Aufnahmetaschen fixiert. Ebenso ist denkbar, dass die Querträgerteile mit seitlichen Förderriemen der Fördervorrichtung verbunden sind.

Die aus Kunststoff geformten Strukturkörper sind an ihren das Erntegut aufnehmenden Oberseiten mit einer Materiallage versehen, die eine geringe Haftung von Boden- und Pflanzenstrukturen gewährleistet, so dass die bei optimaler Elastizität ein geringes Gewicht aufweisenden Strukturkörper insgesamt an ihrer Oberfläche gegen nachteilige Verklebungen mit Beimengungen des Erntegutes gesichert sind und damit Gewichtserhöhungen während des Erntevorgangs auch bei schweren Böden vermieden sind.

Es versteht sich, dass die vorbeschriebene Konstruktion des Förderorgans aus einstückigen Strukturkörpern eine einfache Montage und Austauschbarkeit innerhalb des Systems ermöglicht und dieses entsprechend der Materialauswahl elastisch und reißfest ausgeführt werden kann.

Diese Fördervorrichtung mit den einstückigen Strukturkörpern ist insbesondere in Form eines Überladeelevators an einem Rodeaggregat vorgesehen. Der Überladeelevator ist als Anbauteil an einem Kartoffel- oder Rübenroder so angeordnet, dass aus diesem heraus gefördertes Erntegut besonders schonend aufgenommen und verlagert werden kann. Dabei machen sich die Vorteile der aus Kunststoff bestehenden Strukturkörper am Förderorgan auch dadurch bemerkbar, dass an diesen Strukturkörpern jeweilige mit dem Erntegut in Kontakt gelangende Anlageprofile geformt sind und diese - entsprechend der Transportrichtung - optimal an das Förderkonzept angepasst sind. Dabei ist insbesondere vorgesehen, dass der Mitnehmer mit einer sich über die gesamte Länge ihres Querrandbereiches erstreckenden Schutz-Lippe versehen wird und damit ein schonendes Abgleiten des Erntegutes ohne scharfkantige Berührungspunkte möglich ist.

Die Konstruktion der Strukturkörper ist dabei so optimiert, dass der Querträger bzw. ein in diese Strukturkörper integrierbarer Stabilisator die entsprechenden Zug- und/oder Druckkräfte am Förderband aufnehmen kann und durch eine gezielte Abdeckung dieser Stabilisierungsteile gleichzeitig aber auch die schonende Behandlung des Erntegutes gewährleistet ist.

Eine weitere Ausführung sieht vor, dass die Strukturkörper als einstückige Flächenelemente mit mehreren der Mitnehmer und Ablageflächen geformt werden. Dies ist insbesondere durch Herstellung in speziellen Spritzguss-Vorrichtungen denkbar, wobei vorzugsweise eine "Doppel-Variante" mit zwei Mitnehmern und zwei Ablageflächen vorgesehen ist und dabei eine "einstückige" Biegezone als Verbindungsbereich zwischengeordnet wird.

Das Konzept der aus Kunststoff bestehenden Strukturkörper sieht ebenfalls vor, dass diese unmittelbar - beispielsweise bei der Herstellung durch einen Spritzgussvorgang - mit zumindest den Bereich der Ablagefläche erfassenden Seitenbegrenzern versehen werden können, so dass eine zusätzliche Montage von Bauteilen an der Fördervorrichtung entbehrlich wird. Ebenso ist denkbar, dass die Seitenbegrenzer durch form- und/oder kraftschlüssige Verbinder bzw. eine Schweiß- oder Klebeverbindung an den Randseiten der Ablageflächen fixierbar sind.

Weitere Einzelheiten und vorteilhafte Wirkungen der Fördervorrichtung ergeben sich aus der nachfolgenden Beschreibung und der Zeichnung, in der ein Ausführungsbeispiel des Gegenstands der Erfindung näher veranschaulicht ist. Im einzelnen zeigen:
- Fig. 1: eine perspektivische Gesamtdarstellung einer als Überladeelevator ausgebildeten Fördervorrichtung für eine Hackfruchterntemaschine,
- Fig. 2: eine perspektivische Einzeldarstellung eines Teilbereiches eines endlos umlaufenden Förderorgans mit erfindungsgemäßen Flächen-elementen in Form von aneinandergereihten Strukturkörpern,
- Fig. 3: eine Ausschnittsdarstellung ähnlich Fig. 2 mit die erfindungsgemäße Ausführung des Förderorgans verdeutlichenden Einzelteilen,
- Fig. 4: eine Ausschnittsdarstellung im Bereich der Strukturkörper gemäß einem Detail IV in Fig. 1,
- Fig. 5: eine teilweise geschnittene Vorderansicht des erfindungsgemäßen Strukturkörpers als das einstückig hergestellte Flächenelement,
- Fig. 6: eine Draufsicht auf den Strukturkörper gemäß Fig. 5,
- Fig. 7 und Fig. 8: jeweilige Perspektivdarstellungen des Strukturkörpers gemäß Fig. 5,
- Fig. 9: eine Seitenansicht des Strukturkörpers gemäß Fig. 5,
- Fig. 10: eine Schnittdarstellung des Strukturkörpers gemäß einer Linie A-A in Fig. 5,
- Fig. 11: eine Schnittdarstellung des Strukturkörpers gemäß einer Linie B-B in Fig. 5,
- Fig. 12: eine vergrößerte Ausschnittsdarstellung gemäß einem Detail I in Fig. 5,
- Fig. 13: eine Ausschnittsdarstellung gemäß einem Detail II in Fig. 6,
- Fig. 14: eine vergrößerte Ausschnittsdarstellung gemäß einem Detail III in Fig. 10,
- Fig. 15 bis Fig. 17: jeweilige schematische Darstellungen von Fördervorrichtungen mit unterschiedlichen Einbaupositionen des erfindungsgemäßen Förderorgans,
- Fig. 18: eine Perspektivdarstellung einer zweiten Ausführung des einstückigen Strukturkörpers mit zwei Mitnehmern und zwei Ablageflächen, und
- Fig. 19: eine schematische Schnittdarstellung einer Verbindungsphase bei der Montage der Strukturkörper gemäß Fig. 18.

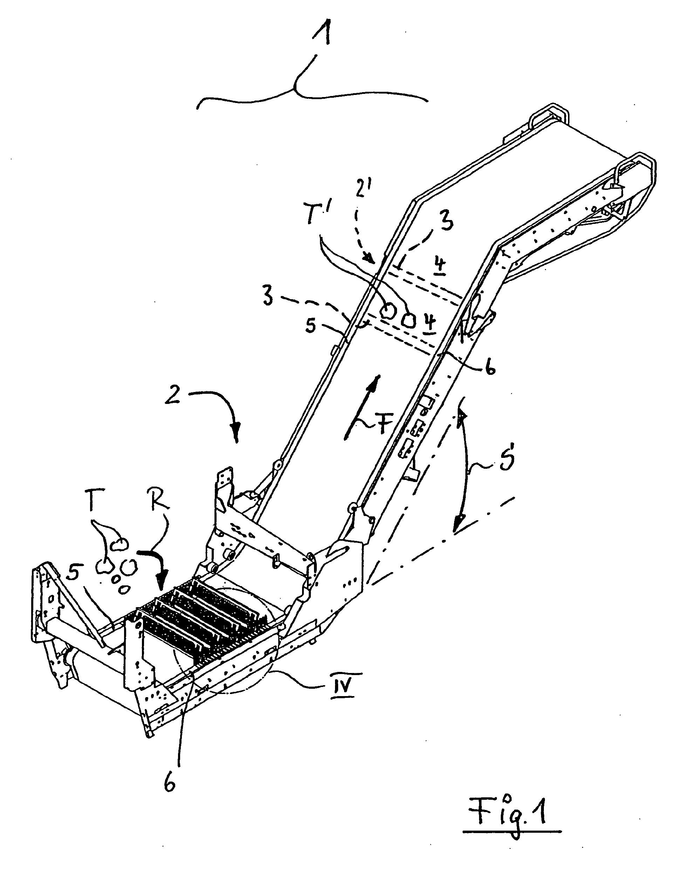

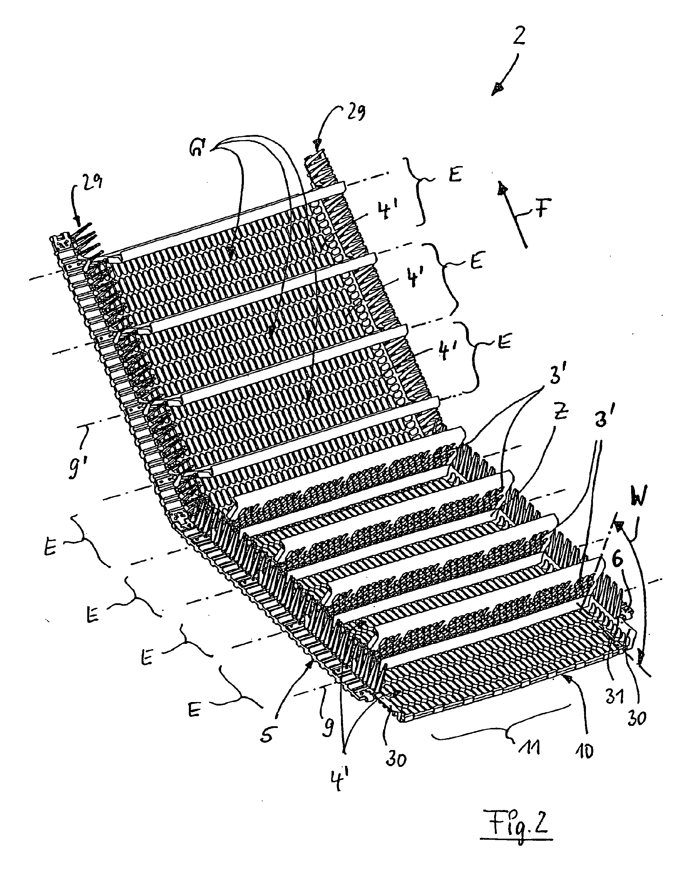

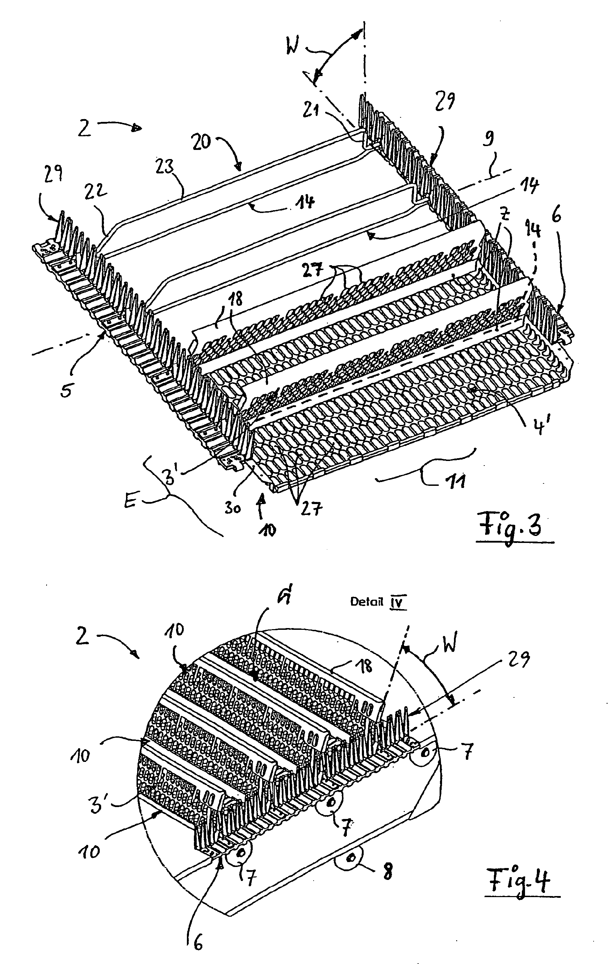

In Fig. 1 ist eine insgesamt mit 1 bezeichnete Fördervorrichtung dargestellt, wobei diese insbesondere in Form eines Überladeelevators für eine Hackfruchterntemaschine (nicht dargestellt) vorgesehen ist. Derartige Fördervorrichtungen (DE 20 2005 008 426) weisen ein endlos umlaufendes Förderorgan 2' auf, das mit mehreren in einer Zuführrichtung (Pfeil R) im wesentlichen Kartoffeln, Rüben o. dgl. Transportgüter T aufnehmenden Ablageflächen 4 versehen ist, die durch jeweilige quer zur Förderrichtung F verlaufende Mitnehmer 3 abgeteilt sind (als Stand der Technik, Fig. 1, schematische Darstellung, rechte Seite). Derartige Förderorgane 2' werden dabei durch zwei parallel zueinander umlaufende Förderriemen 5, 6 (Fig. 2) o. dgl. Bandelemente angetrieben, wobei diese Förderriemen mit jeweiligen Antriebs- und Umlenkrollen 7, 8 (Fig. 4) zusammenwirken.

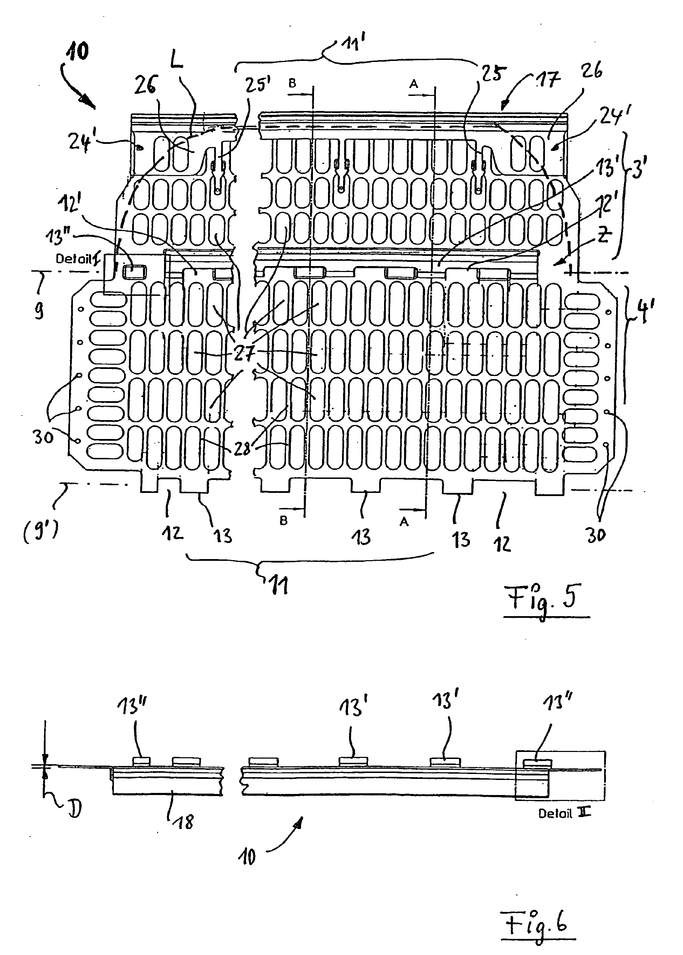

Die Fördervorrichtung 1 weist ein konstruktiv verbessertes Förderorgan 2 auf, das in erfindungsgemäßer Ausführung (Detail IV, Fig. 1) aus mehreren, als zwei funktionsintegrierte Teilbereiche sowohl den Mitnehmer 3' als auch die Ablagefläche 4' aufweisenden Flächenelementen E zusammengesetzt ist (Fig. 2). Diese Flächenelemente E sind dabei in Form von einstückigen Strukturkörpern 10 (Fig. 5) vorgesehen, die in einer gemäß den Darstellungen in Fig. 1 bis Fig. 4 ersichtlichen Verbindungsstellung "bandartig" aneinandergereiht sind, derart, dass mittels dieses dann endlosen Förderorgans 2 in der Fördervorrichtung 1 eine entsprechende Förderung des Erntegutes T, T' von der Aufgabestelle zur Abgabestelle hin möglich ist (Pfeil F).

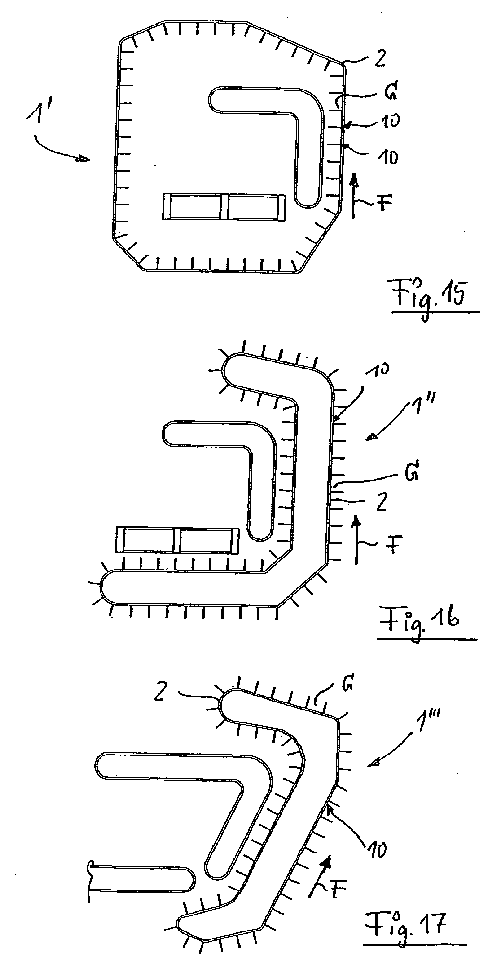

Aus einer Zusammenschau von Fig. 5 und Fig. 1 wird deutlich, dass die als jeweiliges Flächenelement E hergestellten und in Verbindungszonen Z zugfest verbundenen Strukturkörper 10 in montierter Lage bereichsweise gelenkartig so zusammenwirken, dass auch die in Fig. 15 bis Fig. 17 gezeigten Konturen des Laufweges des Förderorgans 2 optimal durchlaufen werden.

Mit diesen Strukturkörpern 10 können weitgehend längenvariable Förderorgane 2 für Fördervorrichtungen 1 zusammengesetzt werden, wobei das einteilige Konzept der Strukturkörper 10 eine optimale Anpassung der beiden beim Transport wirksamen Teilbereiche 3' und 4' an das jeweilige Erntegut T ermöglicht. Neben einer Optimierung bezüglich der Montage und Austauschbarkeit innerhalb dieses Systems sind die aus Kunststoff gefertigten Strukturkörper 10 funktionsintegriert so herstellbar, dass ein optimales Nachsieb-Verhalten an Knollen, Rüben o. dgl. Erntegut T wirksam wird, dessen schonende Mitnahme gewährleistet ist und durch geringe Haftung von Bodenanteilen am Kunststoff-Material der Strukturkörper 10 die Langzeitstabilität des Systems insgesamt erhöht werden kann. Entsprechend den vorgesehenen Einsatzbedingungen können die einstückigen Strukturkörper 10 in optimierter Fertigung als Spritzgussteile hergestellt werden, durch eine variable Wahl des Materials sowie der Wanddicken kann ein geringes Gewicht erreicht werden, dieses kann durch eine entsprechende Ausbildung von Durchlassöffnungen 27 (Fig. 5) verbessert werden, und die Strukturkörper 10 sind insgesamt elastisch und gleichzeitig reißfest herstellbar.

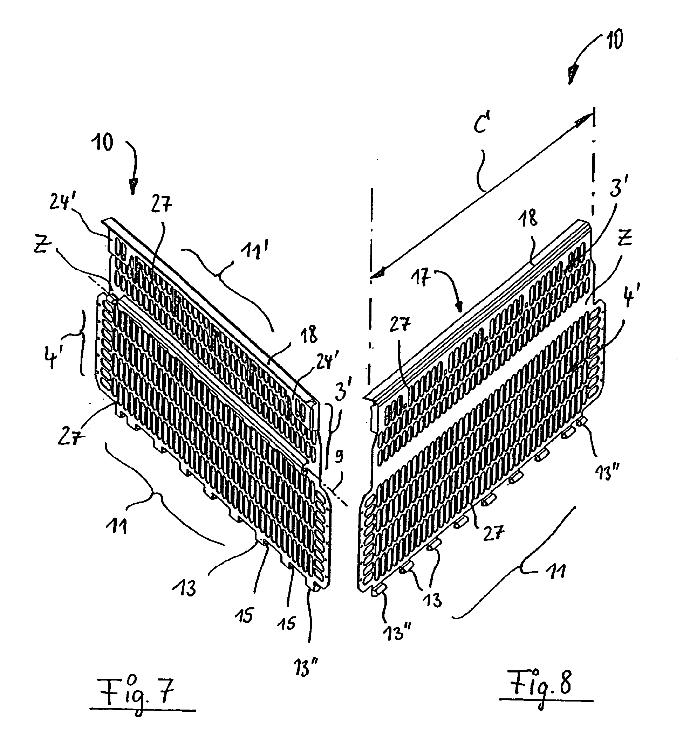

Eine Zusammenschau der Einzeldarstellung der Strukturkörper 10 gemäß Fig. 5 mit der montierten Verbindungsstellung mit mehreren dieser Flächenelemente E gemäß Fig. 2 verdeutlicht, dass die einstückigen Strukturkörper 10 im Bereich zwischen ihrer Ablagefläche 4' und dem flächigen Mitnehmer 3' mit einer im wesentlichen quer über die gesamte Breite C (Fig. 8) des Strukturkörpers 10 verlaufenden Biegezone Z geformt sind.

In der bandartig aneinandergereihten Verbindungsstellung der Strukturkörper 10 (Fig. 2 bis Fig. 4) werden die jeweiligen flächigen Teilbereiche der Mitnehmer 3' in eine jeweilige Winkelstellung W (Fig. 2) zur Ebene der jeweiligen Ablagefläche 4' verlagert. Diese Winkelstellungen W der Mitnehmer 3' sind weitgehend variabel vorgebbar. In der dargestellten Gebrauchsstellung des Förderorgans 2 sind die jeweiligen Biegezonen Z der Strukturkörper 10 nach Art eines Filmscharniers o. dgl. gelenkartige Verbindung wirksam, derart, dass die Mitnehmer 3' in jeweiligen unterschiedlichen Förderphasen bzw. -schrägen (Fig. 1, Fig. 2) in Förderrichtung F eine jeweils optimale Position zum Transport des Erntegutes T, T' einnehmen und dabei die beiden verbundenen Teilbereiche 3', 4' insbesondere bei sich ändernder Förderschräge S um eine Querachse 9, 9' so "schwenkbar" sind, dass vergleichsweise geringe Verschleiß-Belastungen der Strukturkörper 10 auftreten. Die Konstruktion sieht dabei vor, dass der in seine Winkelstellung W verlagerte Mitnehmer 3' in dieser Lage so fixiert ist, dass diese Lage zumindest in aufsteigenden Förderphasen (Fig. 1, Pfeil F) auch unterschiedlicher Fördervorrichtungen 1' (Fig. 15), 1" (Fig. 16) und 1''' (Fig. 17) den optimalen Transport gewährleistet.

Für eine optimale Aneinanderreihung der Strukturkörper 10 in der Verbindungsstellung ist vorgesehen, dass die jeweiligen in Förderrichtung F hinteren Querseitenenden 11 (Fig. 2, Fig. 3) der Ablageflächen 4' mit den vorgeordneten Strukturkörpern 10 im Bereich der jeweiligen Biegezone Z verbunden werden und damit die taschenartigen Mitnahmezonen G (Fig. 2) für das Erntegut T gebildet werden. Gleichzeitig grenzen dabei die jeweiligen Anlageflächen 4' aneinander, und durch die Winkelstellung W der Mitnehmer 3' werden die Mitnahmezonen G abgeteilt.

Für die Herstellung dieser Verbindungen ist der Strukturkörper 10 (Fig. 5) im Bereich seiner Biegezone Z und des vorderen Querseitenendes 11 mit im wesentlichen komplementären Verbindungsprofilen versehen, die in Form von Rast- oder Clipelementen geformt sein können (nicht dargestellt). In der dargestellten Ausführung der Strukturkörper 10 (Fig. 5 bis Fig. 8) sind im Bereich des Querseitenrandes 11 und der Biegezone Z als komplementäre Verbindungsprofile jeweils nutartige Freiräume 12, 12' und in diese federartig einführbare Ansätze 13, 13' vorgesehen.

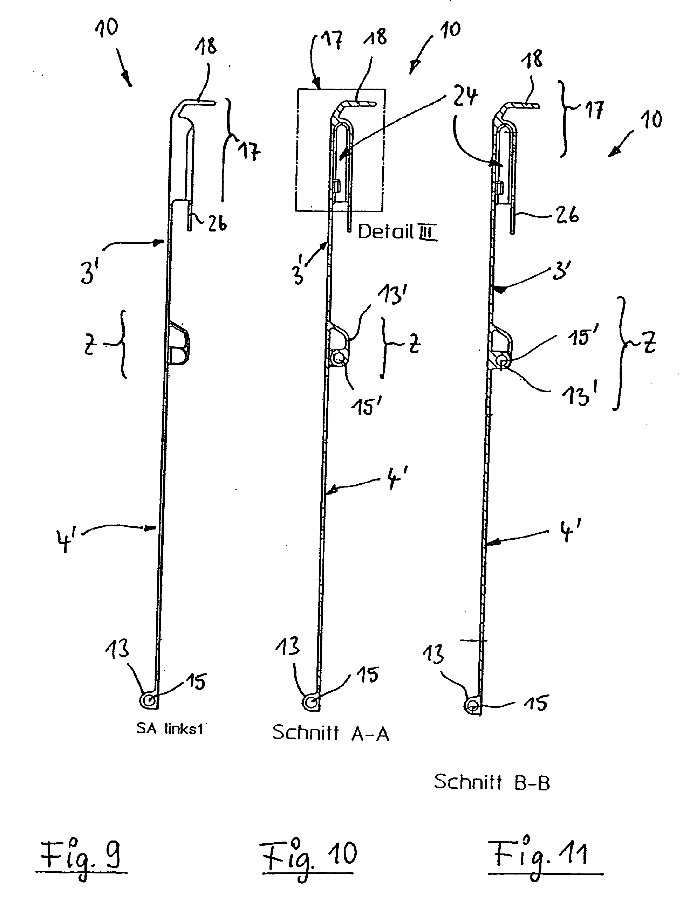

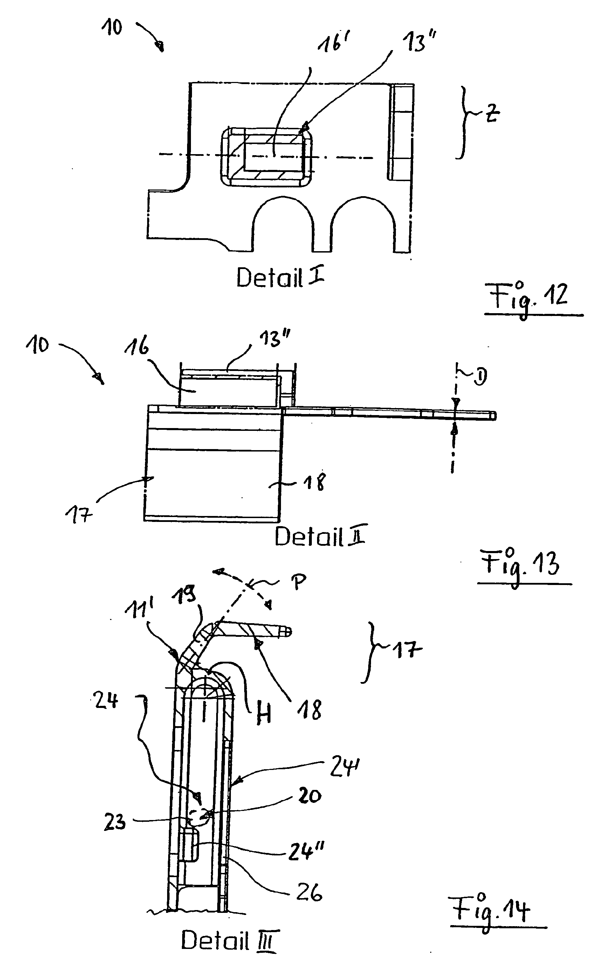

In zweckmäßiger Ausführung können die zu verbindenden Strukturkörper 10 im Bereich der komplementären Verbindungsprofile mit einem zusätzlichen Querträgerteil 14 (Fig. 3) zusammenwirken, so dass die Verbindungsstabilität in der Verbindungsstellung erhöht wird. Dabei weist der Strukturkörper 10 im Bereich der das Verbindungsprofil bildenden Ansätze 13, 13' jeweils eine oder mehrere in Querrichtung verlaufende Durchgangsöffnungen 15, 15' auf (Schnittdarstellungen gemäß Fig. 10 und Fig. 11), so dass darin der stabförmige Querträger 14 aufnehmbar ist. Im Bereich der in Querrichtung randseitigen Ansätze 13" (Fig. 6, Fig. 13) ist eine Fixierung des Querträgers 14 dadurch möglich, dass der Strukturkörper 10 mit einem bodenseitig geschlossenen Sackloch 16, 16' (Fig. 12, Fig. 13) versehen ist. Ebenso ist denkbar, dass der Querträger 14 bis in den Bereich der Förderriemen 5, 6 verlängert und mit diesen verbunden ist. Auch eine Verbindung mit einem Stabilisator 20 (Fig. 3) kann vorgesehen sein.

Aus der Zusammenschau von Fig. 7 und Fig. 8 mit Fig. 14 wird deutlich, dass der Mitnehmer 3' des Strukturkörpers 10 an seinem in Verbindungsstellung endseitigen - in der dargestellten Gebrauchslage gemäß Fig. 2: oberen - Querrandbereich 11 mit einem eine schonende Verlagerung von Erntegut T bewirkenden Anlageprofil 17 versehen ist. Die Schnittdarstellung gemäß Fig. 14 verdeutlicht, dass das Anlageprofil 17 als eine einstückig mit dem Querrandbereich 11' des Mitnehmers 3 geformte und dabei eine zumindest bereichsweise über diesem vorstehende Lippe 18 ausgebildet ist (Fig. 9 bis Fig. 11). Dabei erstreckt sich diese Lippe 18 über die gesamte Länge des Querrandbereiches 11' bzw. die Breite des Strukturkörpers 10 (Fig. 8). Denkbar ist auch, dass die Lippe 18 in Längsrichtung geteilte Abschnitte aufweist (nicht dargestellt).

Für eine weitere Optimierung dieses Profilbereiches am Randbereich 11' des Mitnehmers 3 ist die Lippe 18 mit einem abgewinkelten und sich konisch verjüngenden Profilbereich 19 versehen, so dass eine besonders schonende Abweisung des Erntegutes T sowohl in der Zuführphase (Pfeil R, Fig. 1) als auch bei der Übergabe erreicht wird. Die Lippe 18 ist dabei "federnd" verlagerbar, kann entsprechend der jeweiligen Gewichtsbelastung in jeweilige Pendelrichtungen P (Fig. 14) ausweichen und so die Anlagestöße des Erntegutes T dämpfen.

Unter dem Gesichtspunkt einer gewichtsoptimalen Herstellung der Strukturkörper 10 ist vorgesehen, diese mit geringer Wanddicke D (Fig. 6, Fig. 13) zu fertigen. Damit sind die Flächenelemente E durch eine "tuchartige" Gestaltung weitgehend instabil, so dass in der dargestellten Einbaulage bzw. Verbindungsstellung mehrerer der Strukturkörper 10 zumindest bereichsweise eine Aussteifung der Mitnehmer 3' bzw. der Auflageflächen 4' erforderlich sein kann. Dazu ist vorgesehen, dass der Strukturkörper 10 zumindest im Teilbereich des Mitnehmers 3' einen in diesen integrierbaren Stabilisator 20 aufweist (Fig. 3).

Aus dieser Prinzipdarstellung gemäß Fig. 3 wird deutlich, dass der Stabilisator 20 als ein jeweilige seitliche Schenkel 21, 22 und einen mittleren Strebenbogen 23 aufweisender Tragbügel ausgebildet ist, der aus Metall und/oder Kunststoff gefertigt werden kann. In zweckmäßiger Ausführung kann der Stabilisator 20 - und ebenso der die Querachse 9 bildende Querträger 14 - jeweils aus glasfaserverstärktem Kunststoff gefertigt sein, so dass eine optimale Elastizität im Bereich der durch das Gewicht des Erntegutes T belasteten Aufnahmetaschen G erreicht wird.

Für die Aufnahme des Stabilisators 20, der sich ausgehend von der Biegezone Z bogenförmig erstrecken kann (Strich-Linie L in Fig. 5), ist der Strukturkörper 10 zumindest bereichsweise mit jeweiligen Profiltaschen 24 versehen (Fig. 9 bis Fig. 11 und Fig. 14), die als Abdeckprofilbereiche wirksam sind und eine unmittelbare Berührung des Erntegutes T mit dem Stabilisator 20 verhindern. Dieser kann in der Profiltasche 24 an einem Profilansatz 24" gesichert werden.

Aus der Ansicht gemäß Fig. 5 wird deutlich, dass die beiden seitlichen Abdeckprofile 24' als jeweilige mit Clips-Haltern 25, 25' versehene Abdecklappen 26 geformt sind und diese am oberen Ende des Querrandes 11 nahe dem Ansatz der Lippe 18 eine "flexible" Haltezone H bilden (Fig. 14).

Die bereits beschriebene funktionale Wirkung des Strukturkörpers 10 mit einer am Erntegut T wirkenden "Nachsieb-Phase" wird dadurch erreicht, dass jeweilige Durchlassöffnungen 27 an beiden Teilbereichen 3' und 4' vorgesehen sind. Dabei sind diese Durchlassöffnungen 27 als ein das jeweilige Flächengewicht optimierendes Lochmuster so angeordnet, dass über das gesamte Flächenelement E minimale Stegbereiche 28 erreicht werden (Fig. 5). Damit kann bei optimalen Transporteigenschaften über die gesamte Transportstrecke der Vorrichtung 1 bzw. das Fördertrum des Förderorgans 2 ein Ausleiten von Beimengungen des Erntegutes T erreicht werden.

Das Gesamtkonzept der Fördervorrichtung 1 (Fig. 1) sieht auch vor, dass die Strukturkörper 10 zumindest im Bereich ihrer jeweiligen Ablagefläche 4' mit an sich bekannten Seitenbegrenzern 29 versehen werden. Aus den Darstellungen gemäß Fig. 2 bis Fig. 4 wird deutlich, dass die Seitenbegrenzer 29 mittels jeweiliger Verbindungsöffnungen 30 und darin vorgesehener Verbindungsmittel 31 im Bereich der Strukturkörper 10 bzw. der Förderriemen 5, 6 festlegbar sind. Ebenso ist denkbar, dass die Seitenbegrenzer 29 bei der Herstellung der Strukturkörper 10, beispielsweise bei einem Spritzvorgang, einstückig mitgeformt werden oder durch eine Schweiß- oder Klebeverbindung fixierte Seitenbegrenzer angebracht werden (nicht dargestellt).

In Fig. 15 bis Fig. 17 sind jeweilige Prinzipdarstellungen von unterschiedliche Förderstrecken und -längen aufweisenden Fördervorrichtungen 1', 1" und 1"' dargestellt, bei denen das erfindungsgemäß ausgebildete Förderorgan 2 mit schematisch dargestellten Strukturkörpern 10 verwendet wird. Aus Fig. 15 ist ein Ringelevator 1' zu entnehmen, Fig. 16 zeigt einen Seitenelevator 1", und in Fig. 17 ist die Ausbildung eines Steilelevators 1"' dargestellt.

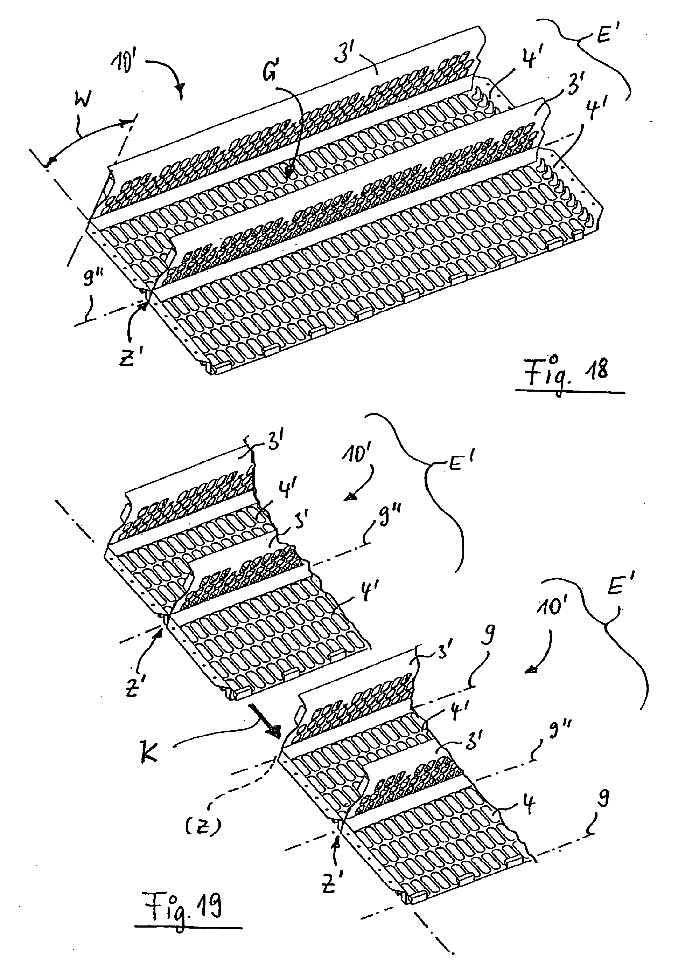

In Fig. 18 und Fig. 19 ist eine zweite Ausführung von Strukturkörpern 10' dargestellt, wobei diese als einstückige Flächenelemente E' jeweils mit zwei Mitnehmern 3' sowie zwei Ablageflächen 4' versehen sind. Diese Einheiten werden mit jeweils einer bereits vor der Band-Montage hergestellten, als fertigungstechnisch integrierte Verbindung vorgesehenen Biege-Verbindungs-Zone Z' geformt, womit gleichzeitig die "Scharnier-Funktion" im Bereich einer mit 9 gleichwirkenden Querachse 9" erreicht wird. Damit weist dieses insbesondere als Spritzgussteil hergestellte Konstruktion eine "Doppel-Variante" von Wirkflächen auf, wobei auch weitere ähnliche Gestaltungen vergrößerte Strukturkörper, beispielsweise mit drei oder mehr einstückig integral verbundenen Teilflächen, denkbar sind (nicht dargestellt).

Aus Fig. 19 ist eine Montagephase beim Verbinden der beiden vergrößerten Strukturkörper 10' ersichtlich, wobei in einer Steckphase (Pfeil K) nunmehr "zusätzlich" die bereits in Fig. 1 bis 8 beschriebenen Verbindungsprofile wirksam sind. Für diese Ausführung sind die aus der Fig. 5 ersichtlichen Einzelmerkmale an diesem Strukturkörper 10' nicht nochmals sämtlich beschrieben.

Bei dieser Montage-Variante der Strukturkörper 10 wird die bandartige Aneinanderreihung mit den zwei unterschiedlich aufgebauten und im wesentlichen gleich wirkenden flexiblen Biegezonen Z und Z' erreicht. Es versteht sich, dass die vorbeschriebenen Ausführungen der beiden Strukturkörper 10 und/oder 10' in weitgehend variablen Abfolgen zu dem Band (Fig. 1) aneinandergereiht werden können und dieses in jeweiligen die entsprechenden Vorteile - auch bei unterschiedlichen Bandabmessungen - aufweisenden Fördervorrichtungen 1 genutzt wird.

## Patentansprüche

1. Fördervorrichtung für Hackfruchterntemaschinen, mit zumindest einem endlos umlaufenden und aufgenommene Bodenteile absiebenden Förderorgan (2'), das mehrere im wesentlichen Kartoffeln, Rüben o. dgl. Transportgüter (T, T') aufnehmende und durch quer zur Förderrichtung (F) verlaufende Mitnehmer (3) abgeteilte Ablageflächen (4) aufweist, **dadurch gekennzeichnet, dass** das Förderorgan (2) mit mehreren jeweils zumindest einen Mitnehmer (3') sowie zumindest eine Ablagefläche (4') definierenden einstückigen Strukturkörpern (10, 10') versehen ist und diese in Form von aneinandergereihten Flächenelementen (E) in zumindest einer jeweiligen Verbindungszone (Z, Z') bandartig verbindbar sind, wobei der jeweilige Strukturkörper (10, 10') im Bereich der Mitnehmer (3') und der Ablagefläche (4') mit eine Siebfunktion bewirkenden Durchlassöffnungen (27) versehen ist.

2. Fördervorrichtung nach Anspruch 1, **dadurch gekennzeichnet, dass** die einstückigen Strukturkörper (10, 10') im Bereich ihrer als Mitnehmer (3') und Ablagefläche (4') vorgesehenen Teilbereiche zumindest teilweise aus Kunststoff bestehen und die zumindest eine Verbindungszone (Z) gelenkartig bzw. scharnierartig ausgebildet ist.

3. Fördervorrichtung nach Anspruch 1 oder 2, **dadurch gekennzeichnet, dass** die Strukturkörper (10, 10') als jeweilige Spritzgussteile vorgesehen sind, derart, dass mit der bandartigen Verbindung mehrerer der Strukturkörper (10, 10') ein aus Gleichbauteilen bestehendes Leichtbausystem gebildet ist.

4. Fördervorrichtung nach einem der Ansprüche 1 bis 3, **dadurch gekennzeichnet, dass** der einstückige Strukturkörper (10, 10') im Bereich zwischen Ablagefläche (4') und Mitnehmer (3') mit einer quer verlaufenden Biegezone (Z, Z') versehen ist.

5. Fördervorrichtung nach Anspruch 4, **dadurch gekennzeichnet, dass** in der Verbindungsstellung der Strukturkörper (10, 10') die jeweiligen flächigen Teilbereiche der Mitnehmer (3') um eine quer zur Förderrichtung (F) verlaufende Querachse (9) verschwenkbar sind, derart, dass eine jeweilige Winkelstellung (W) zur Ebene der Ablageflächen (4') gebildet ist.

6. Fördervorrichtung nach Anspruch 4 oder 5, **dadurch gekennzeichnet, dass** die Winkelstellungen (W) der Mitnehmer (3') variabel sind, derart, dass die jeweilige Biegezone (Z, Z') des Strukturkörpers (10, 10') nach Art eines Filmscharniers wirksam ist und der Mitnehmer (3') nach Erreichen der Winkelstellung (W) in dieser Lage fixierbar ist.

7. Fördervorrichtung nach einem der Ansprüche 1 bis 6, **dadurch gekennzeichnet, dass** bei in Verbindungsstellung aneinandergereihten Strukturkörpern (10, 10') ein jeweiliges Querseitenende (11) der Ablagefläche (4') eines der Strukturkörper mit dem jeweiligen Bereich der Biegezone (Z, Z') eines der zugeordneten Strukturkörper (10, 10') verbindbar ist, derart, dass die jeweiligen Ablageflächen (4') bandartig aneinandergrenzen und die zwischen liegenden Mitnehmer (3') in ihrer ableilenden (G) Wirkposition aufgerichtet sind (Winkel W).

8. Fördervorrichtung nach einem der Ansprüche 1 bis 7, **dadurch gekennzeichnet, dass** der Strukturkörper (10, 10') im Bereich seiner den Mitnehmer (3') fixierenden Biegezone (Z, Z') und des jeweiligen zur Verbindung vorgesehenen Querseitenendes (11) der Ablagefläche (4') mit im wesentlichen komplementären Verbindungsprofilen versehen ist.

9. Fördervorrichtung nach Anspruch 8, **dadurch gekennzeichnet, dass** die Verbindungsprofile mit Rast- und/oder Clipelementen versehen sind.

10. Fördervorrichtung nach Anspruch 8 oder 9, **dadurch gekennzeichnet, dass** die Strukturkörper (10, 10') im Bereich der komplementären Verbindungsprofile mit einem Querträgerteil (14) versehen sind.

11. Fördervorrichtung nach einem der Ansprüche 8 bis 10, **dadurch gekennzeichnet, dass** als komplementäre Verbindungsprofile jeweils nutartige Freiräume (12, 12') und in diese federartig einführbare Ansätze (13, 13') vorgesehen sind.

12. Fördervorrichtung nach einem der Ansprüche 8 bis 11, **dadurch gekennzeichnet, dass** der Strukturkörper (10, 10') im Bereich der das Verbindungsprofil (12, 12'; 13, 13') bildenden Ansätze (13, 13') jeweils eine oder mehrere Durchgangsöffnung(en) (15, 15') aufweisen und darin ein oder mehrere stabförmige(r) Querträger (14) aufnehmbar ist/sind.

13. Fördervorrichtung nach einem der Ansprüche 8 bis 12, **dadurch gekennzeichnet, dass** zumindest im Bereich der in Querrichtung randseitigen Ansätze (13") des Strukturkörpers (10, 10') zumindest ein Sackloch (16, 16') vorgesehen ist.

14. Fördervorrichtung nach einem der Ansprüche 1 bis 13, **dadurch gekennzeichnet, dass** der Mitnehmer (3') des Strukturkörpers (10, 10') an seinem in Verbindungsstellung endseitigen Querrandbereich (11') mit einem eine schonende Verlagerung von Erntegut (T) bewirkenden Anlageprofil (17) versehen ist.

15. Fördervorrichtung nach Anspruch 14, **dadurch gekennzeichnet, dass** das Anlageprofil (17) als eine einstückig mit dem Querrandbereich (11') des Mitnehmers (3') geformte und zumindest bereichsweise über diesem vorstehende Lippe (18) ausgebildet ist.

16. Fördervorrichtung nach Anspruch 15, **dadurch gekennzeichnet, dass** sich die Lippe (18) über die gesamte Länge (C) des Querrandbereiches (11') erstreckt.

17. Fördervorrichtung nach einem der Ansprüche 14 bis 16, **dadurch gekennzeichnet, dass** die Lippe (18) in Gebrauchslage des Mitnehmers (3') den oberen Querrandbereich (11') mit einem abgewinkelten Profilbereich (19) überdeckt.

18. Fördervorrichtung nach einem der Ansprüche 1 bis 14, **dadurch gekennzeichnet, dass** der Strukturkörper (10, 10') zumindest im Teilbereich des Mitnehmers (3') einen in diesen integrierbaren Stabilisator (20) aufweist.

19. Fördervorrichtung nach Anspruch 18, **dadurch gekennzeichnet, dass** als Stabilisator (20) ein jeweilige seitliche Schenkel (21, 22) und einen mittleren Strebenbogen (23) aufweisender Tragbügel aus Metall und/oder Kunststoff vorgesehen ist.

20. Fördervorrichtung nach Anspruch 18 oder 19, **dadurch gekennzeichnet, dass** der Stabilisator (20) ausgehend von der Biegezone (Z, Z') des Strukturkörpers (10, 10') zumindest bereichsweise in jeweiligen Profiltaschen (24) jeweiliger Abdeckprofilbereiche (24') aufnehmbar ist.

21. Fördervorrichtung nach einem der Ansprüche 15 bis 17, **dadurch gekennzeichnet, dass** der Strukturkörper (10, 10') im Bereich der den zumindest einen Stabilisator (20) aufnehmenden Abdeckprofile (24') jeweilige Clips-Halter (25, 25') aufweisende Abdecklappen (26') aufweist.

22. Fördervorrichtung nach einem der Ansprüche 1 bis 21, **dadurch gekennzeichnet, dass** die Durchlassöffnungen (27) der Strukturkörper (10, 10') als ein das jeweilige Flächengewicht optimierendes Lochmuster mit Stegen (28) angeordnet sind.

23. Fördervorrichtung nach einem der Ansprüche 1 bis 22, **dadurch gekennzeichnet, dass** der Strukturkörper (10, 10') zumindest im Bereich der Ablagefläche (4') mit Seitenbegrenzern (29) versehen ist.

24. Fördervorrichtung nach Anspruch 23, **dadurch gekennzeichnet, dass** die Seitenbegrenzer (29) einstückig mit dem Strukturkörper (10, 10') geformt sind.

25. Fördervorrichtung nach Anspruch 23, **dadurch gekennzeichnet, dass** die Seitenbegrenzer (29) form- und/oder kraftschlüssig an der Ablagefläche (4') festlegbar sind.

26. Fördervorrichtung nach einem der Ansprüche 1 bis 25, **dadurch gekennzeichnet, dass** der einstückig hergestellte Strukturkörper (10') mit mehreren Mitnehmern (3') sowie mehreren Ablageflächen (4') als das Flächenelement (E') geformt ist.

27. Fördervorrichtung nach Anspruch 26, **dadurch gekennzeichnet, dass** unterschiedliche Ausführungen der Strukturkörper (10, 10') in variabler Folge bandartig aneinanderreihbar sind.

## Claims

1. Conveyor arrangement for root crop harvesters, having at least one continuously circulating conveying member (2') which sieves out pieces of earth which have been picked up and which has a plurality of support areas (4) which receive mainly potatoes, beets or the like crops to be transported (T, T') and which are partitioned off by entraining members (3) extending transversely to the direction of conveyance (F), **characterised in that** the conveying member (2) is provided with a plurality of one-piece structured bodies (10, 10') which each define at least one entraining member (3') and at least one support area (4') and, in the form of planar members (E) placed in line against one another, these structured bodies (10, 10') can be connected, in at least one respective connecting zone (Z, Z'), into a belt, each structured body (10, 10') being provided, in the region of the entraining members (3') and support area (4'), with openings (27) to allow free passage which perform a sieving function.

2. Conveyor arrangement according to claim 1, **characterised in that**, in the region of their sub-regions intended as entraining members (3') and support areas (4'), the one-piece structured bodies (10, 10') are at least partly composed of plastics material and the at least one connecting zone (Z) takes a joint-like or hinge-like form.

3. Conveyor arrangement according to claim 1 or 2, **characterised in that** the structured bodies (10, 10') are provided in the form of respective injection mouldings in such a way that the connection into a belt of a plurality of the structured bodies (10, 10') produces a lightweight construction system comprising identical components.

4. Conveyor arrangement according to one of claims 1 to 3, **characterised in that** the one-piece structured body (10, 10') is provided with a transversely extending bending zone (Z, Z') in the region between the support area (4') and the entraining member (3').

5. Conveyor arrangement according to claim 4, **characterised in that**, when the structured bodies (10, 10') are in the connected position, the respective planar sub-regions forming the entraining members (3') can be pivoted on a transverse axis (9) extending transversely to the direction of conveyance (F) in such a way that a given angular position (W) is taken up relative to the plane of the support areas (4').

6. Conveyor arrangement according to claim 4 or 5, **characterised in that** the angular positions (W) of the entraining members (3') are variable in such a way that the bending zone (Z, Z') of each structured body (10, 10') acts after the fashion of a film hinge and the entraining member (3'), on reaching the angular position (W), can be fixed in this position.

7. Conveyor arrangement according to one of claims 1 to 6, **characterised in that**, when the structured bodies (10, 10') are placed in line against one another in the connected position, a given transverse side (11) of the support area (4') of each one of the structured bodies can be connected to the region formed by the bending zone (Z, Z') of one of the associated structured bodies (10, 10') in such a way that the individual support areas (4') adjoin one another like a belt and the entraining members (3') situated between them are erected (angle W) in their operative partitioning-off (G) position.

8. Conveyor arrangement according to one of claims 1 to 7, **characterised in that**, in the region of its bending zone (Z, Z'), which fixes the entraining member (3') in position, and in the region of each transverse side (11) of the support area (4') which is intended for connection, the structured body (10, 10') is provided with substantially complementary connecting profiles.

9. Conveyor arrangement according to claim 8, **characterised in that** the connecting profiles are provided with latching and/or clip members.

10. Conveyor arrangement according to claim 8 or 9, **characterised in that** the structured bodies (10, 10') are provided with a transverse strut part (14) in the region of the complementary connecting profiles.

11. Conveyor arrangement according to one of claims 8 to 10, **characterised in that** what are provided as complementary connecting profiles are, respectively, notch-like free spaces (12, 12') and projections (13, 13') which can be introduced thereinto to act as springs.

12. Conveyor arrangement according to one of claims 8 to 11, **characterised in that**, in the region of the projections (13, 13') which form the connecting profile (12, 12'; 13, 13'), each structured body (10, 10') has one or more through-openings (15, 15') and one or more rod-like transverse supporting members (14) can be received in these through-openings (15, 15').

13. Conveyor arrangement according to one of claims 8 to 12, **characterised in that** at least one blind hole (16, 16') is provided in the region of those projections (13") from the structured body (10, 10') which are at the ends in the transverse direction.

14. Conveyor arrangement according to one of claims 1 to 13, **characterised in that**, in its transverse edge region (11') which forms a termination in the connected position, the entraining member (3') of the structured body (10, 10') is provided with a contacting profile (17) which is responsible for non-damaging displacement of the harvested crop (T).

15. Conveyor arrangement according to claim 14, **characterised in that** the contacting profile (17) takes the form of a lip (18) which is formed in one piece with the transverse edge region (11') of the entraining member (3') and which projects therebeyond at least in a region or regions.

16. Conveyor arrangement according to claim 15, **characterised in that** the lip (18) extends for the entire length (C) of the transverse edge region (11').

17. Conveyor arrangement according to one of claims 14 to 16, **characterised in that**, when the entraining member (3') is in the in-use position, an angled profiled region (19) of the lip (18) covers the top of the transverse edge region (11').

18. Conveyor arrangement according to one of claims 1 to 14, **characterised in that**, at least in the sub-region formed by the entraining member (3'), the structured body (10, 10') has a stabiliser (20) which is incorporated in the said entraining member (3').

19. Conveyor arrangement according to claim 18, **characterised in that** what is provided as a stabiliser (20) is a supporting bow of metal or plastics material which has respective lateral arms (21, 22) and a central strut (23) forming an arch.

20. Conveyor arrangement according to claim 18 or 19, **characterised in that**, starting from the bending zone (Z, Z') of the structured body (10, 10'), at least a region or regions of the stabiliser (20) can be received in respective profiled pockets (24) in respective regions (24') forming covering profiles.

21. Conveyor arrangement according to one of claims 15 to 17, **characterised in that**, in the region of the covering profiles (24') which receive the at least one stabiliser (20), the structured body (10, 10') has respective covering flaps (26') which each have clip-type holders (25, 25').

22. Conveyor arrangement according to one of claims 1 to 21, **characterised in that** the openings (27) to allow free passage in the structured bodies (10, 10') are laid out in the form of a pattern of holes having intervening webs (28) which optimises the particular weight per unit area.

23. Conveyor arrangement according to one of claims 1 to 22, **characterised in that** the structured body (10, 10') is provided with lateral fences (29) at least in the region of the support area (4').

24. Conveyor arrangement according to claim 23, **characterised in that** the lateral fences (19) are formed in one piece with the structured body (10, 10').

25. Conveyor arrangement according to claim 23, **characterised in that** the lateral fences (29) can be fixed to the support area (4') by frictional or positive engagement.

26. Conveyor arrangement according to one of claims 1 to 25, **characterised in that** the structured body (10, 10') which is produced in one piece is formed to have a plurality of entraining members (3') and a plurality of support areas (4') as the planar member (E').

27. Conveyor arrangement according to claim 26, **characterised in that**, to form a belt, different embodiments of the structured bodies (10, 10') can be placed in line against one another in a variable sequence.

## Revendications

1. Dispositif de transport pour des machines de récolte de fruits hachés avec au moins un organe de transport (2') tournant sans fin et tamisant des parties de sol reçues, qui présente plusieurs surfaces de réception (4) recevant essentiellement des pommes de terre, des tubercules ou produits à transporter similaires (T, T') et divisées par des entraîneurs (3) s'étendant transversalement au sens de transport (F), **caractérisé en ce que** l'organe de transport (2) est pourvu de plusieurs corps structurels (10, 10') d'un seul tenant définissant respectivement au moins un entraîneur (3') ainsi qu'au moins une surface de réception (4') et ceux-ci peuvent être reliés comme une bande sous la forme d'éléments de surface (E) joints les uns aux autres dans au moins une zone de liaison (Z, Z') respective, le corps structurel (10, 10') respectif étant pourvu, dans la zone des entraîneurs (3') et de la surface de réception (4'), d'ouvertures de passage (27) provoquant une fonction de tamisage.

2. Dispositif de transport selon la revendication 1, **caractérisé en ce que** les corps structurels (10, 10') d'un seul tenant se composent au moins en partie de plastique dans la zone de leurs zones partielles prévues comme entraîneur (3') et surface de réception (4') et l'au moins une zone de liaison (Z) est réalisée comme une articulation ou une charnière.

3. Dispositif de transport selon la revendication 1 ou 2, **caractérisé en ce que** les corps structurels (10, 10') sont prévus comme des parties moulées par injection respectives de telle manière qu'un système de construction légère constitué de composants identiques soit formé avec la liaison de type bande de plusieurs des corps structurels (10, 10').

4. Dispositif de transport selon l'une quelconque des revendications 1 à 3, **caractérisé en ce que** le corps structurel (10, 10') d'un seul tenant est pourvu dans la zone entre la surface de réception (4') et l'entraîneur (3') d'une zone de flexion (Z, Z') s'étendant transversalement.

5. Dispositif de transport selon la revendication 4, **caractérisé en ce que** dans la position de liaison des corps structurels (10, 10'), les zones partielles planes respectives des entraîneurs (3') peuvent être pivotées autour d'un axe transversal (9) s'étendant transversalement au sens de transport (F) de telle manière qu'une position angulaire respective (W) par rapport au plan des surfaces de réception (4') soit formée.

6. Dispositif de transport selon la revendication 4 ou 5, **caractérisé en ce que** les positions angulaires (W) des entraîneurs (3') sont variables de telle manière que la zone de flexion respective (Z, 2') du corps structurel (10, 10') fonctionne comme une charnière à film et l'entraîneur (3') puisse être fixé dans cette position après l'atteinte de la position angulaire (W).

7. Dispositif de transport selon l'une quelconque des revendications 1 à 6, **caractérisé en ce que** pour des corps structurels (10, 10') joints les uns aux autres en position de liaison, une extrémité latérale transversale respective (11) de la surface de réception (4') de l'un des corps structurels peut être reliée à la zone respective de la zone de flexion (Z, Z') de l'un des corps structurels associés (10, 10') de telle manière que les surfaces de réception (4') respectives se joignent les unes aux autres comme une bande et les entraîneurs (3') placés au milieu soient redressés dans leur position active de division (G) (angle W).

8. Dispositif de transport selon l'une quelconque des revendications 1 à 7, **caractérisé en ce que** le corps structurel (10, 10') est pourvu de profilés de liaison sensiblement complémentaires dans la zone de sa zone de flexion (Z, Z') fixant l'entraîneur (3') et de l'extrémité latérale transversale (11) respective prévue pour la liaison de la surface de réception (4').

9. Dispositif de transport selon la revendication 8, **caractérisé en ce que** les profilés de liaison sont pourvus d'éléments à cran et/ou à agrafe.

10. Dispositif de transport selon la revendication 8 ou 9, **caractérisé en ce que** les corps structurels (10, 10') sont pourvus d'une partie de traverse (14) dans la zone des profilés de liaison complémentaires.

11. Dispositif de transport selon l'une quelconque des revendications 8 à 10, **caractérisé en ce que** des espaces libres (12, 12') de type rainure et des saillies (13, 13') pouvant être introduites dedans comme un ressort sont prévus respectivement comme profilés de liaison complémentaires.

12. Dispositif de transport selon l'une quelconque des revendications 8 à 11, **caractérisé en ce que** le corps structurel (10, 10') présente dans la zone des saillies (13, 13') formant le profilé de liaison (12, 12', 13, 13') respectivement une ou plusieurs ouvertures de passage (15, 15') et une ou plusieurs traverses en forme de barre (14) peuvent être reçues dedans.

13. Dispositif de transport selon l'une quelconque des revendications 8 à 12, **caractérisé en ce qu'**au moins un trou borgne (16, 16') est prévu au moins dans la zone des saillies (13'') côté bord dans le sens transversal du corps structurel (10, 10'').

14. Dispositif de transport selon l'une quelconque des revendications 1 à 13, **caractérisé en ce que** l'entraîneur (3') du corps structurel (10, 10') est pourvu, sur sa zone de bord transversal (11') côté extrémité en position de liaison, d'un profilé d'appui (17) provoquant un déplacement soigneux de produit de récolte (T).

15. Dispositif de transport selon la revendication 14, **caractérisé en ce que** le profilé d'appui (17) est réalisé comme une lèvre (18) formée d' un seul tenant avec la zone de bord transversal (11') de l'entraîneur (3') et dépassant au moins par endroits de celle-ci.

16. Dispositif de transport selon la revendication 15, **caractérisé en ce que** la lèvre (18) s'étend sur toute la longueur (C) de la zone de bord transversal (11').

17. Dispositif de transport selon l'une quelconque des revendications 14 à 16, **caractérisé en ce que** la lèvre (18) recouvre en position d'utilisation de l'entraîneur (3') la zone de bord transversal supérieure (11') avec une zone profilée coudée (19).

18. Dispositif de transport selon l'une quelconque des revendications 1 à 14, **caractérisé en ce que** le corps structurel (10, 10') présente au moins dans la zone partielle de l'entraîneur (3') un stabilisateur (20) pouvant être intégré dans celui-ci.

19. Dispositif de transport selon la revendication 18, **caractérisé en ce qu'**un étrier porteur présentant des branches latérales respectives (21, 22) et un arcboutant (23) médian en métal et/ou plastique est prévu comme stabilisateur (20).

20. Dispositif de transport selon la revendication 18 ou 19, **caractérisé en ce que** le stabilisateur (20) peut être reçu en partant de la zone de flexion (Z, Z') du corps structurel (10, 10') au moins par endroits dans des poches profilées respectives (24) de zones profilées de recouvrement (24') respectives.

21. Dispositif de transport selon l'une quelconque des revendications 15 à 17, **caractérisé en ce que** le corps structurel (10, 10') présente dans la zone des profilés de recouvrement (24') recevant l'au moins un stabilisateur (20) des languettes de recouvrement (26') présentant des supports d'agrafe respectifs (25, 25').

22. Dispositif de transport selon l'une quelconque des revendications 1 à 21, **caractérisé en ce que** les ouvertures de passage (27) des corps structurels (10, 10') sont disposées comme un modèle perforé optimisant le grammage respectif avec des entretoises (28).

23. Dispositif de transport selon l'une quelconque des revendications 1 à 22, **caractérisé en ce que** le corps structurel (10, 10') est pourvu de délimiteurs latéraux (29) au moins dans la zone de la surface de réception (4').

24. Dispositif de transport selon la revendication 23, **caractérisé en ce que** les délimiteurs latéraux (29) sont formés d'un seul tenant avec le corps structurel (10, 10').

25. Dispositif de transport selon la revendication 23, **caractérisé en ce que** les délimiteurs latéraux (29) peuvent être fixés par complémentarité de formes et/ou à force sur la surface de réception (4').

26. Dispositif de transport selon l'une quelconque des revendications 1 à 25, **caractérisé en ce que** le corps structurel (10') fabriqué d'un seul tenant est formé avec plusieurs entraîneurs (3') ainsi que plusieurs surfaces de réception (4') comme élément de surface (E').

27. Dispositif de transport selon la revendication 26, **caractérisé en ce que** différentes réalisations des corps structurels (10, 10') peuvent être jointes comme une bande en suite variable.
